# EUROPEAN PATENT APPLICATION

(11) **EP 2 085 217 A1**
(43) Date of publication of application: **05.08.2009**
(21) Application number: 09075008.4
(22) Date of filing: 12.01.2009
(51) Int. Cl.: B32B 27/42, B32B 29/00, B44C 5/04

(54) **Method of producing a thin laminate to be shaped for coating decorative surfaces and laminate obtained thereby**

(30) Priority: 17.01.2008 IT MI20080065
(71) Applicant: Cesaplast S.p.A., 20031 Cesano Maderno (MI) (IT)
(72) Inventor: Cermenati, Piero, 20031 Cesano Maderno (MI) (IT)
(74) Representative: Riccardi, Sergio

(57) **Abstract**

A method of producing a thin laminate to be shaped for coating decorative surfaces is disclosed, comprising a support layer for giving the required strength and an outer visible layer giving the intrinsic and decorative characteristics, said layers being continuously laminated after the impregnation of the outer layer with a plasticizing resin. The support layer comprises parchment paper and the outer layer of decorative paper is printed with a pattern reproducing the wood texture or is of a plain colour. The laminate is adapted to coat section bars for the manufacture of door and window frames and casings.

## Description

The present invention relates to a method of producing a thin laminate adapted to coat decorative surfaces, more particularly section bars used to manufacture door and window frames and casings.

Laminates for this use are already known and marketed, comprising a support layer for the required strength and an outer decorative layer giving the plasticity and flexibility characteristics. These laminates are applied on section bars made of metal, plastics or wooden materials such as chipboard and hard board panels, plywood and the like, giving the appearance of solid wood.

However to coat door and window jambs, usually having a plurality of right angled edges in a shortly spaced sequence, it is necessary to impregnate the decorative layer with a plasticizing substance to obtain the required flexibility for a satisfactory adhesion to said edges.

In spite of this contrivance, application of said laminate is difficult and laborious, requires skilled and attentive personnel, and when the distance between edges is very short, defects of adhesion to the underlying profile as well as laminate cracks and/or ripples are likely to occur.

Through a specific research work, requiring a considerable time spent in laboratory and industrial pilot tests, and thanks to the long experience acquired in the specific industrial field, applicant now succeeded to finalize a thin, extra soft laminate having a high capability to be shaped with very sharp and shortly sequenced angles, even later after being heated.

This characteristic is indeed a fundamental technical requirement to coat wood based profiles, more particularly for interior doors. This result was obtained by optimising the whole production process and more particularly by developing a specific plasticizing resin using a particular additive ingredient which is its main characteristic.

As above mentioned, the laminate according to the present invention comprises two layers, namely a support layer (component A) for its strength and an outer visible layer (component B) providing for both intrinsic and decorative characteristics. The final laminate thickness is in the range between 0.15 and 0.20 mm and a weight between 0.2 and 0.3 kg/m². The lamination of these two layers is made in specific presses with a continuous thermomelting process under a specific pressure between 15 and 30 kg/cm² and a temperature between 160 ° and 170°C achieving the resin polymerisation. The product coming out from the press is then cooled and wound in rolls, ready for stockage or shipment to the users.

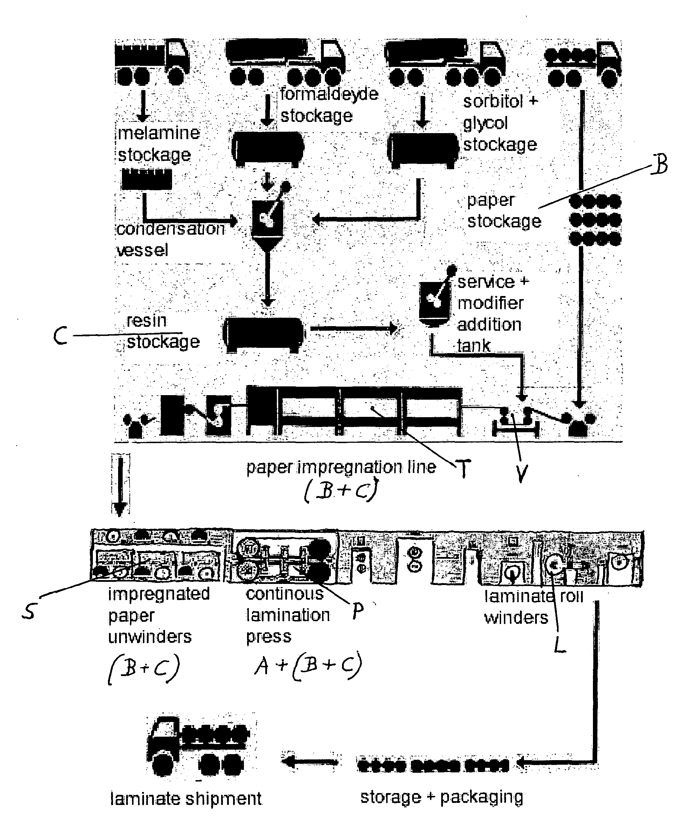

The schematic flow of the steps of said process for the continuous production of the decorative layer according to the present invention, is shown in the illustrative chart of the accompanying drawing.

With reference now to said chart, in the upper part the process of the outer decorative layer is shown, where the starting materials of the plasticizing resin (melamine, formaldehyde, mixture of lower aliphatic alcohols) are mixed with water and reacted in the condensation vessel and the so obtained resin C is stocked and then delivered, through the service tank and addition of modifiers, to the trough V where the resin impregnates the decorative paper B that after suitable metering is dried in the hot air tunnel T and then wound into rolls R, which are then sent to the unwinders S. The impregnated paper B+C is now laminated in the lamination presses P with the support layer A with the above mentioned continuous thermomelting process causing the resin polymerisation. At the outlet from press P the finished laminate L is cooled and wound into rolls as already mentioned.

A detailed description of the three components A, B, C constituting the laminate of the invention is now given hereinafter.

### Component A

Parchment paper of vegetable origin having a weight between 50 and 70 g/m² available on the market ready to be used; the main object of this component is the support of component B increasing at the same time strength and thickness.

### Component B

Raw cellulose based decorative paper printed with a pattern reproducing the wood texture or of plain colour, having a weight between 60 and 110 g/m², available on the market, which is treated with said impregnation process with corresponding equipment.

Indeed this paper is impregnated with the plasticizing water based resins being the main characteristic of the invention (Component C); the paper enters a bath comprising the resin and after a suitable metering step is dried in a hot air tunnel and at the end of this process has a weight in the range between 160 and 250 g/m² and a contents of volatile substances between 6.5 and 7.5%. At this point said component B+C is ready to be laminated to Component A.

### Component C

In order to give to the laminate the desired extra softness and flexibility, applicant made the following formulation of plasticizing resin.

The water based resin is obtained by mixing and reacting in a suitable condensation vessel or autoclave at a temperature between 85 and 95°C; the total reaction time is in the range between 290 and 340 minutes, including the cooling stage which is in the range between 50 and 60 minutes.

During the condensation process the pH value is kept constant at 9.5-10 by adding soda.

The starting chemicals are introduced at the same time into the autoclave and are as follows:

| | |
|---|---|
| Formaldehyde 36% | min 2000 kg max 2200 kg |
| Powdered melamine | 1500 kg |
| Mixture of lower aliphatic alcohols | min 1050 kg max 1800 kg |
| Water | min 350 kg max 450 kg |

The mixture of lower aliphatic alcohols mainly comprises sorbitol and diethylene glycol, fundamental ingredients to give to the laminate its excellent properties of plasticity, flexibility and softness.

This resin may be used even some days after its preparation and at the time of use for impregnation of Component B, in the service tank for adding modifiers, the following adjustment is made every 600 liters of base resin:

| | |
|---|---|
| Acidic catalyst as accelerator | 9-11 kg |
| Diethylene glycol | 10-15 kg |
| Urea | 20 kg |
| Wetting agent (nonylphenol polyglycol ether) | 6 lt |
| Release agent (Acmos) | 10 lt |

From the foregoing description it is clear that the present invention achieved the expected object to make a thin decorative laminate which can be highly shaped to coat decorative surfaces, moreover by using relatively cheap starting materials, but it has to be pointed out that an illustrative embodiment was described in some detail, without limiting however the scope of the invention, to which variations, modifications, additions and/or substitutions may be made by a man skilled in the art from a reading of the foregoing disclosure, without departing however from the scope of protection of the invention, such as defined in the appended claims.

## Claims

1. A method of producing a thin laminate to be shaped for coating decorative surfaces, comprising a support layer for the required strength and an outer visible layer giving the intrinsic and decorative characteristics, said layers being continuously laminated after the impregnation of the outer layer with a plasticizing resin, **characterized in that** the plasticizing resin is an aqueous base resin obtained by mixing and reacting formaldehyde, melamine and a mixture of lower aliphatic alcohols with water.

2. The method of claim 1, **characterized in that** the chemical reaction to prepare the plasticizing resin takes place in a condensation vessel or autoclave at a temperature between 85 and 95°C.

3. The method of claim 2, **characterized in that** the pH value during the condesation reaction is kept constant by adding soda.

4. The method of one or more of the preceding claims, **characterized in that** the mixture of lower aliphatic alcohols mainly comprises sorbitol and diethylene glycol.

5. The method of one or more of the preceding claims, **characterized in that** at the time of impregnating the outer layer, said plasticizing resin undergoes an adjustment by adding an acidic catalyst as accelerator, diethylene glycol, urea, a wetting and a release agent.

6. The method of one or more of the preceding claims, **characterized in that** the lamination of the two layers takes place in a press by thermomelting at a pressure between 15 and 30 kg/cm² and a temperature between 160 and 170°C.

7. A thin laminate to be shaped for coating decorative surfaces obtained by a method according to one or more of the preceding claims.

8. Laminate according to claim 7, **characterized in that** the support layer comprises parchment paper of vegetable origin and the like and the outer layer comprises a raw cellulose based decorative paper printed with a pattern reproducing the wood texture or of plain colour, impregnated with the plasticizing resin of one or more of claims 1-6.

9. Use of the laminate of claims 7 and 8, for coating section bars for the manufacture of door and window frames and casings.
